# EUROPEAN PATENT APPLICATION

(11) **EP 2 693 766 A1**
(43) Date of publication of application: **05.02.2014**
(21) Application number: 13178997.6
(22) Date of filing: 01.08.2013
(51) Int. Cl.: H04N 21/482, G06F 3/0482, H04N 5/445, G06F 3/0489

(54) **Systems and methods for data navigation**

(30) Priority: 02.08.2012 US 201213565646
(71) Applicant: Comcast Cable Communications, LLC, Philadelphia, PA 19103 (US)
(72) Inventor: Gehring, Shaun, Warminster Pennsylvania 18974 (US)
(74) Representative: Mozzi, Matteo

(57) **Abstract**

A system and method for data navigation are disclosed. One method comprises defining a bounded portion or region of data and defining a navigation rule for the bounded portion of data, wherein the navigation rule defines a movement of an indicator relative to the bounded portion.

## Description

### BACKGROUND

Often, content presented to a user can include selectable items such as icons or menu options. In order to make a desired selection of a selectable element, a user must navigate the content using a control device such as a remote controller, keyboard, touch screen, or joystick. To facilitate data navigation, a control device can require discrete control codes for every potential operation. Further, one control device can implement different control functions as compared to another control device. Currently, control software code is implemented independently for each content platform and for the specific content being presented. Thousands of lines of code are usually needed to complete an entire application and the current rules defining navigation of the content can be cumbersome and complicated. Current systems and methods do not provide an efficient, standardized means for data navigation using various control devices.

### SUMMARY

It is to be understood that both the following general description and the following detailed description are exemplary and explanatory only and are not restrictive, as claimed. Provided are methods and systems for data navigation.

In an aspect, the systems and methods of the present disclosure can control navigation of content or objects based on relative position of one content or object element to another. For example, up, down, left, and right input commands can be analyzed based on an indicator position and navigation rules associated with the indicator position. As a further example, the systems and methods can analyze and/or store information relating to content within each positional direction of an indicator and can process navigation decisions based upon such information.

In another aspect, methods can comprise defining a bounded portion of an object, e.g., comprising content. As an example, a navigation rule can be defined for the bounded portion of the object. The navigation rule can define a movement of an indicator relative to the object. As a further example, an input command can be received, the input command relating to the movement of the indicator, and the input command can be processed based upon the navigation rule.

In another aspect, methods can comprise receiving a command and determining a location of an indicator. If the location of the indicator is within a first bounded portion of data, the command can be processed based upon a first navigation rule to perform a first action. If the location is within a second bounded portion of data, the command can be processed based upon a second navigation rule to perform a second action.

Additional advantages will be set forth in part in the description which follows or may be learned by practice. The advantages will be realized and attained by means of the elements and combinations particularly pointed out in the appended claims. It is to be understood that both the foregoing general description and the following detailed description are exemplary and explanatory only and are not restrictive, as claimed.

### BRIEF DESCRIPTION OF THE DRAWINGS

The accompanying drawings, which are incorporated in and constitute a part of this specification, illustrate embodiments and together with the description, serve to explain the principles of the methods and systems:
Figure 1 is a block diagram of an exemplary network;
Figure 2A is a block diagram on an exemplary network;
Figure 2B is a perspective view of an exemplary user environment;
Figure 3A is a flow chart of an exemplary method;
Figure 3B is a representation of an exemplary bounded portion of data;
Figure 4 is a graphical representation of an exemplary navigation rule;
Figure 5 is a graphical representation of an exemplary navigation rule;
Figure 6 is a graphical representation of an exemplary navigation rule;
Figure 7 is a flow chart of an exemplary method;
Figure 8A is a graphical representation of an exemplary user interface;
Figure 8B is a graphical representation of an exemplary user interface;
Figure 9A is a graphical representation of an exemplary user interface;
Figure 9B is a graphical representation of an exemplary user interface; and
Figure 10 is a block diagram of an exemplary computing device.

### DETAILED DESCRIPTION

Before the present methods and systems are disclosed and described, it is to be understood that the methods and systems are not limited to specific methods, specific components, or to particular implementations. It is also to be understood that the terminology used herein is for the purpose of describing particular embodiments only and is not intended to be limiting.

As used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by use of the antecedent "about," it will be understood that the particular value forms another embodiment. It will be further understood that the endpoints of each of the ranges are significant both in relation to the other endpoint, and independently of the other endpoint.

"Optional" or "optionally" means that the subsequently described event or circumstance may or may not occur, and that the description includes instances where said event or circumstance occurs and instances where it does not.

Throughout the description and claims of this specification, the word "comprise" and variations of the word, such as "comprising" and "comprises," means "including but not limited to," and is not intended to exclude, for example, other components, integers or steps. "Exemplary" means "an example of" and is not intended to convey an indication of a preferred or ideal embodiment. "Such as" is not used in a restrictive sense, but for explanatory purposes.

Disclosed are components that can be used to perform the disclosed methods and systems. These and other components are disclosed herein, and it is understood that when combinations, subsets, interactions, groups, etc. of these components are disclosed that while specific reference of each various individual and collective combinations and permutation of these may not be explicitly disclosed, each is specifically contemplated and described herein, for all methods and systems. This applies to all aspects of this application including, but not limited to, steps in disclosed methods. Thus, if there are a variety of additional steps that can be performed it is understood that each of these additional steps can be performed with any specific embodiment or combination of embodiments of the disclosed methods.

The present methods and systems may be understood more readily by reference to the following detailed description of preferred embodiments and the examples included therein and to the Figures and their previous and following description.

As will be appreciated by one skilled in the art, the methods and systems may take the form of an entirely hardware embodiment, an entirely software embodiment, or an embodiment combining software and hardware aspects. Furthermore, the methods and systems may take the form of a computer program product on a computer-readable storage medium having computer-readable program instructions (e.g., computer software) embodied in the storage medium. More particularly, the present methods and systems may take the form of web-implemented computer software. Any suitable computer-readable storage medium may be utilized including hard disks, CD-ROMs, optical storage devices, or magnetic storage devices.

Embodiments of the methods and systems are described below with reference to block diagrams and flowchart illustrations of methods, systems, apparatuses and computer program products. It will be understood that each block of the block diagrams and flowchart illustrations, and combinations of blocks in the block diagrams and flowchart illustrations, respectively, can be implemented by computer program instructions. These computer program instructions may be loaded onto a general purpose computer, special purpose computer, or other programmable data processing apparatus to produce a machine, such that the instructions which execute on the computer or other programmable data processing apparatus create a means for implementing the functions specified in the flowchart block or blocks.

These computer program instructions may also be stored in a computer-readable memory that can direct a computer or other programmable data processing apparatus to function in a particular manner, such that the instructions stored in the computer-readable memory produce an article of manufacture including computer-readable instructions for implementing the function specified in the flowchart block or blocks. The computer program instructions may also be loaded onto a computer or other programmable data processing apparatus to cause a series of operational steps to be performed on the computer or other programmable apparatus to produce a computer-implemented process such that the instructions that execute on the computer or other programmable apparatus provide steps for implementing the functions specified in the flowchart block or blocks.

Accordingly, blocks of the block diagrams and flowchart illustrations support combinations of means for performing the specified functions, combinations of steps for performing the specified functions and program instruction means for performing the specified functions. It will also be understood that each block of the block diagrams and flowchart illustrations, and combinations of blocks in the block diagrams and flowchart illustrations, can be implemented by special purpose hardware-based computer systems that perform the specified functions or steps, or combinations of special purpose hardware and computer instructions.

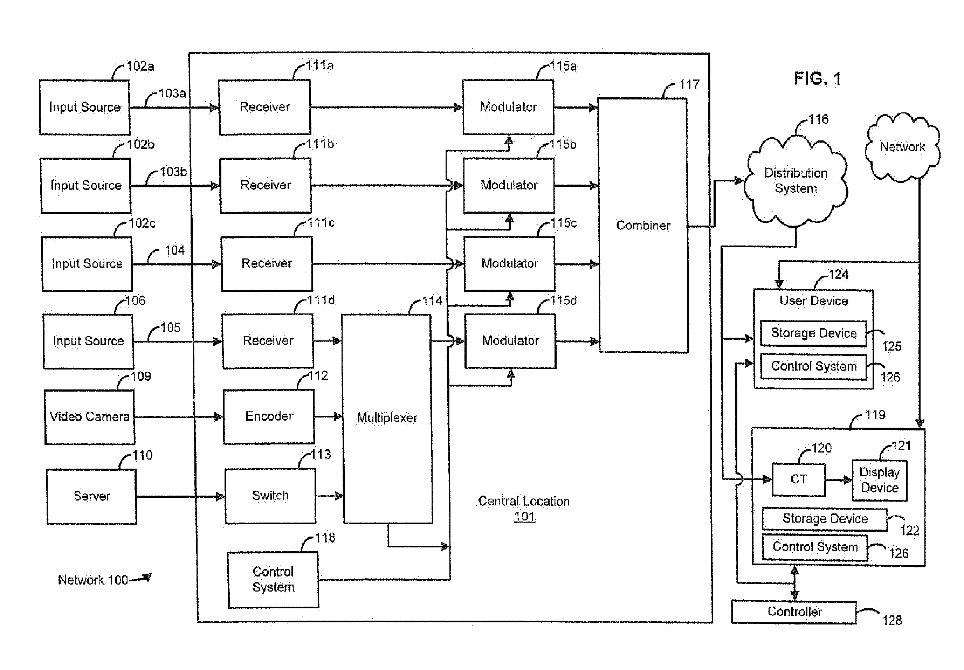

**FIG. 1** illustrates various aspects of an exemplary network in which, at any device or location, the present methods and systems can operate. The present disclosure relates to systems and methods for navigating data. Those skilled in the art will appreciate that present methods may be used in systems that employ both digital and analog equipment. One skilled in the art will appreciate that provided herein is a functional description and that the respective functions can be performed by software, hardware, or a combination of software and hardware.

In an aspect, network **100** can comprise a central location **101** (e.g., a control or processing facility in a fiber optic network, wireless network or satellite network, a hybrid-fiber coaxial (HFC) content distribution center, a processing center, headend, etc.), which can receive content (e.g., data, input programming, and the like) from multiple sources. The central location **101** can combine the content from the various sources and can distribute the content to user (e.g., subscriber) locations (e.g., location **119)** via distribution system **116.**

In an aspect, the central location **101** can create content or receive content from a variety of sources **102a, 102b, 102c.** The content can be transmitted from the source to the central location **101** via a variety of transmission paths, including wireless (e.g. satellite paths **103a, 103b)** and terrestrial path **104.** The central location **101** can also receive content from a direct feed source **106** via a direct line **105.** Other input sources can comprise capture devices such as a video camera **109** or a server **110.** The signals provided by the content sources can include, for example, a single content item or a multiplex that includes several content items. In an aspect, the central location **101** can create and/or receive application, such as interactive applications. Such applications can be related to a particular content.

The central location **101** can comprise one or a plurality of receivers **111a, 111b, 111c, 111d** that are each associated with an input source. For example, MPEG encoders such as encoder **112,** are included for encoding local content or a video camera **109** feed. A switch **113** can provide access to server **110,** which can be a Pay-Per-View server, a data server, an internet router, a network system, a phone system, and the like. Some signals may require additional processing, such as signal multiplexing, prior to being modulated. Such multiplexing can be performed by multiplexer (mux) **114.**

The central location **101** can comprise one or a plurality of modulators, **115a, 115b, 115c,** and **115d,** for interfacing to the distribution system **116.** The modulators can convert the received content into a modulated output signal suitable for transmission over the distribution system **116.** The output signals from the modulators can be combined, using equipment such as a combiner **117,** for input into the distribution system **116.**

A control system **118** can permit a system operator to control and monitor the functions and performance of network **100.** The control system **118** can interface, monitor, and/or control a variety of functions, including, but not limited to, the channel lineup for the television system, billing for each user, conditional access for content distributed to users, and the like. Control system **118** can provide input to the modulators for setting operating parameters, such as system specific MPEG table packet organization or conditional access information. The control system **118** can be located at central location **101** or at a remote location.

The distribution system **116** can distribute signals from the central location **101** to user locations, such as user location **119.** The distribution system **116** can be an optical fiber network, a coaxial cable network, a hybrid fiber-coaxial network, a wireless network, a satellite system, a direct broadcast system, or any combination thereof. There can be a multitude of user locations connected to distribution system **116.** At user location **119,** there may be an interface comprising a decoder **120,** such as a gateway or communications terminal (CT) can decode, if needed, the signals for display on a display device **121,** such as on a television set (TV) or a computer monitor. Various wireless devices may also be connected to the network at, or proximate, user location **119.** Those skilled in the art will appreciate that the signal can be decoded in a variety of equipment, including an CT, a computer, a TV, a monitor, or satellite dish. In an exemplary aspect, the methods and systems disclosed can be located within, or performed on, one or more CT's **120,** display devices **121,** central locations **101,** DVR's, home theater PC's, and the like. As an example, a storage device **122** can be in communication with one or more of the CT **120,** the display device **121,** and the central location **101** to send/receive content therebetween. As a further example, the storage device **122** can be located remotely from the user location **119,** such as a network storage. In an aspect, a software such as an operating software, control software, or application software can be stored on the storage device **122.**

In an aspect, user location **119** is not fixed. By way of example, a user can receive content from the distribution system **116** on a mobile device such as a laptop computer, PDA, smartphone, GPS, vehicle entertainment system, portable media player, and the like.

In an aspect, a user device **124** can receive signals from the distribution system **116** for rendering content on the user device **124.** As an example, rendering content can comprise providing audio and/or video, displaying images, facilitating an audio or visual feedback, tactile feedback, and the like. However, other content can be rendered via the user device **124.** In an aspect, the user device **124** can be an CT, a set-top box, a television, a computer, a smartphone, a laptop, a tablet, a multimedia playback device, a portable electronic device, and the like. As an example, the user device **124** can be an Internet Protocol compatible device for receiving signals via a network such as the Internet or some other communications network for providing content to the user. It is understood that other display devices and networks can be used. It is further understood that the user device **124** can be a widget or a virtual device for displaying content in a picture-in-picture environment such as on the display device **121,** for example. As an example, a storage device **125** can be in communication with one or more of the user device **124** and the central location **101** to send/receive content therebetween. As a further example, the storage device **125** can be located remotely from the user device **124,** such as a network storage medium. In an aspect, a software such as an operating software, control software, or application software can be stored on the storage device **125.**

In an aspect, one or more of the CT **120,** the user device **124,** or other device or system can be in communication with a control system **126** or device or element. The control system **126** can be disposed remotely from one or more of the CT **120** and/or the user device **124** and in communication with one or more devices. As an example, the control system **126** can comprise control software for managing one or more control functions and/or navigation rules. As a further example, the control system **126** can be integrated with one or more of the CT **120,** the user device **124,** or other devices or systems.

In an aspect, the control system **126** can be configured to receive, transmit, and/or process encoding such as control codes, code indices, and/or index codes associated with control functions for one or more devices. As an example, the control system **126** can be configured to communicate with a control device or controller **128** to transmit control codes to the controller **128** to enable the controller to control one or more devices. As a further example, the control system **128** can communicate with the controller **128** to evaluate, process, and/or analyze a control input and to determine the control functions and/or navigation functions associated with a particular device (e.g., CT **120,** display device **121,** user device **124)** or content. In an aspect, the control system **126** can control navigation of content based on relative position of one content element to another content element. For example, the standard up, down, left, and right input commands can be analyzed based on an indicator position and navigation rules associated with the indicator position. As a further example, the control system **126** can analyze and/or store information relating to content within each positional direction of an indicator and can process navigation decisions based upon such information.

In an aspect, the controller **128** can be a remote controller configured to communicate with one or more devices via wired and/or wireless communication. As an example, the controller **128** can be software executed by a computing device such as a mobile device, handheld device, tablet, computer, or second screen device. As a further example, the controller **128** can be any hardware and/or software configured to communicate with a device to control functions associated with the device. In an aspect, the controller **128** can transmit input commands to the control system **126,** whereby the control system **126** can process the input commands based upon navigation rules to control navigation of content.

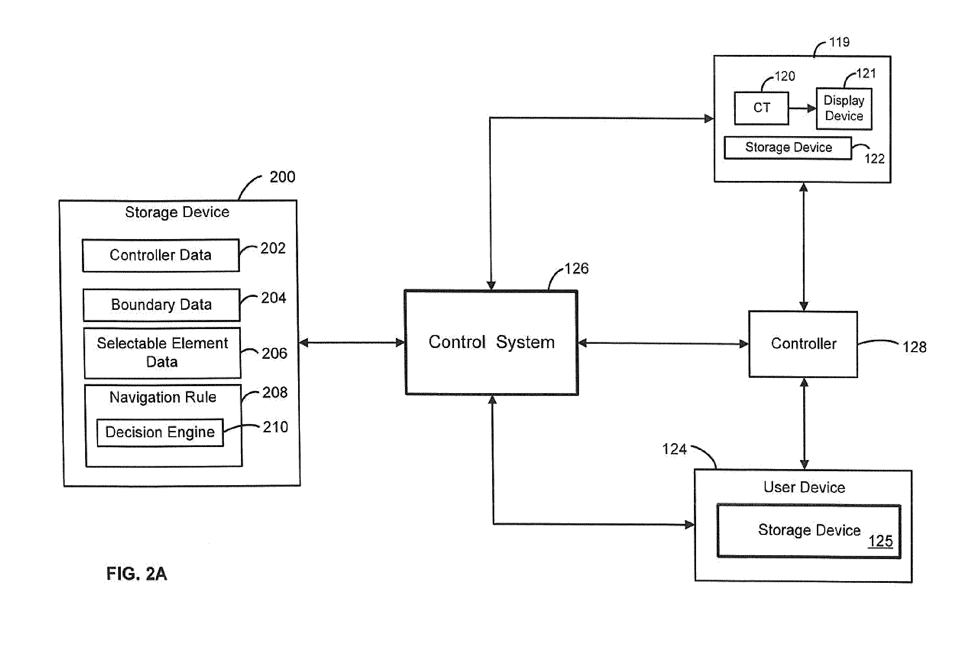

**FIG. 2A** illustrates various aspects of an exemplary system in which some of the disclosed methods and systems can operate. In an aspect, the control system **126** can be disposed remotely from one or more of the CT **120** and/or the user device **124** and in communication with one or more devices such as the CT **120** and/or the user device **124.** As an example, the control system **126** can be disposed in the central location **101.** As a further example, the control system **126** can be integrated into a device to manage control features. In an aspect, the control system **126** can be in communication with the controller **128.** As an example, the control system **126** can received input commands from the controller **128** to enable the controller **128** to interact with and control a device.

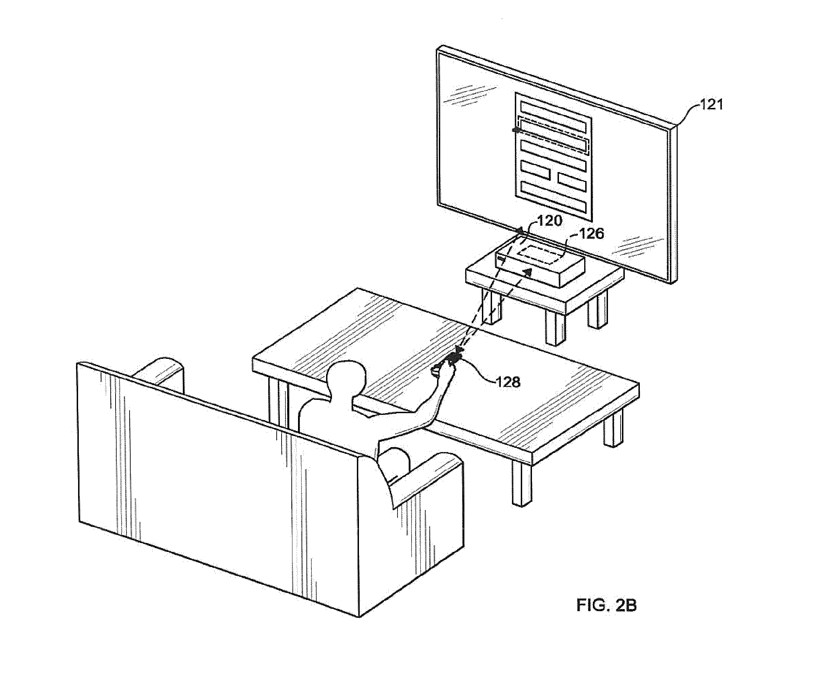

In an aspect, the control system **126** can be disposed in a computing device. As an example the control system **126** can be disposed in one of the CT **120,** user device **124,** a set-top box, or a content receiver. As a further example, the control system **126** can be configured to communicate with the controller **128** in a wireless manner, as illustrated in **FIG. 2****B.** As shown in **FIG. 2B****,** the controller **128** can communicate with a device such as a user interface device (e.g., display device **121,** audio device, video device, home security system, etc.). Other interface environments are also applicable, such as, programming, testing, and other environments. Accordingly, the control system **126** can control navigation of content rendered via the user interface device.

Returning to **FIG. 2A****,** the control system **126** can be in communication with a storage device **200** or storage medium. The storage device **200** can be disposed remotely from one or more of the control system, the CT **120,** the user device **124,** and the controller **128.** As an example, the storage device **200** can be disposed at one of central location **101,** a remote database, or a third-party location. As a further example, the storage device **200** can be integrated or disposed in one or more of the CT **120,** the user device **124,** and the controller **128.** In an aspect, the storage device **200** can be the same storage as storage device **122** or storage device **125.**

In an aspect, the storage device **200** can comprise one or more of controller data **202,** boundary data **204,** selectable element data **206,** one or more navigation rules **208,** and/or a decision engine **210.** Other data, code, and/or process can be stored on and retrieved from the storage device **200.**

In an aspect, the controller data **202** can comprise information relating to one or more control devices or devices for interacting with a user device or computing device. As an example, the controller data **202** can comprise information relating to a manufacturer of a control device, control codes, control options, user interface elements (e.g., buttons), and the like. As a further example, the controller data **202** can comprise information that can be processed by the control system **126** or processor in order to facilitate an interaction or control between the control device and a computing device.

In an aspect, the boundary data **204** can comprise information relating to one or more bounded portions or regions of presented data (e.g., content, meta-data, kit development, information, etc.). As an example, a bounded portion of data can comprise a defined subset or portion of content to a user, a programmer, content developer, or creator, etc.). As a further example, the bounded portion can be coded and not visible to a viewer of the content. As such, the code or specifications defining boundaries of certain content can comprise the boundary data **204.** In an aspect, the boundary data **204** can be processed by the control system **126** to facilitate navigation management inside and/or outside one or more bounded portions.

In an aspect, the selectable element data **206** can comprise information and/or code relating to one or more selectable elements of, e.g. content presented to a user. As an example, a selectable element can comprise a defined subset or group of content presented to a user. As a further example, the selectable element can be a content button, icon, engageable region, menu item, and the like. As such, the code or data defining the selectable element can comprise the selectable element data **206.** In an aspect, the selectable element data **206** can be processed by the control system **126** to facilitate navigation management inside and/or outside one or more bounded portions. In an aspect, the selectable element data **206** can be processed by the control system **126** to facilitate an interaction between a user and presented content such as engaging an icon or menu item on a display.

In an aspect, the one or more navigation rules **208** can comprise information and/or code relating to the processing of commands associated with data navigation. As an example, navigation rule **208** can comprise specific instructions for processing a navigation command relating to a bounded portion of content. As a further example, when a control command (e.g., select, back, etc.) and/or navigation command (e.g., move up, move down, move left, move right, etc.) is associated with a particular bounded portion of content, the control system **126** can process the command(s) based upon one or more navigation rules **208** associated with the bounded portion. In an aspect, the control system **126** can process the command(s) based upon one or more navigation rules **208** applied outside the bounded portion.

In an aspect, the decision engine **210** can comprise information and/or code configured to process one or more command inputs. As an example, the navigation rules **208** can comprise the instructions or guideline for processing a command input, while the decision engine **210** provides navigation instructions to the control system **126** for controlling a navigation of content. In an aspect, the decision engine **210** can be associated with one or more navigation rules **208** to facilitate navigation management inside and/or outside one or more bounded portions.

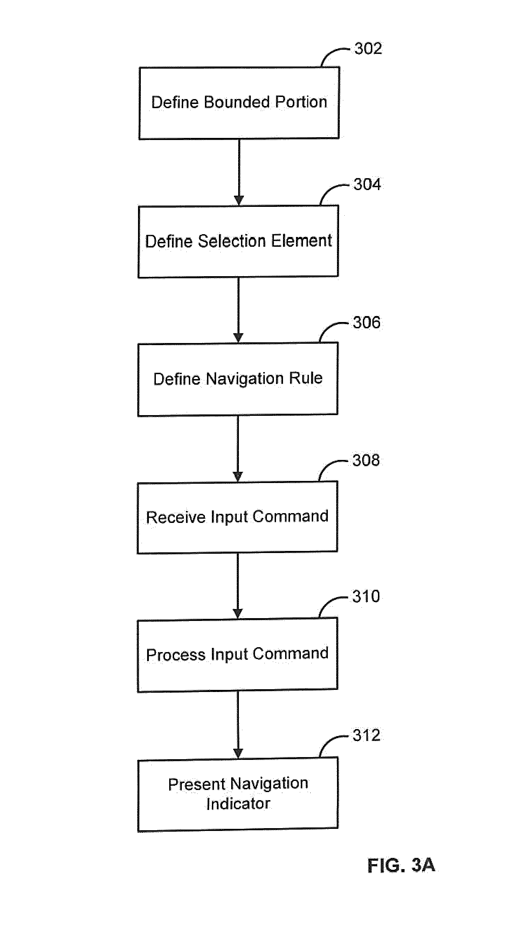

In an aspect, a system and network can be configured to receive input commands for navigating data. As an example, the received input commands can be processed based upon defined bounded portions of content and navigation rules applied to the defined bounded portions of content. **FIG. 3A** illustrates an exemplary method for navigating data, such as content. The method can be applicable for navigating other types of data such as objects, meta-data, kit development, information, etc.).

In step **302,** a bounded portion can be defined. As an example, a bounded portion of data such as content can comprise a defined subset or region of content presented to a user. As a further example, the bounded portion may not be visible to a viewer of the content. As such, the code defining boundaries of certain content can be comprised as the boundary data **204.** In an aspect, the boundary data **204** can be processed by the control system **126** or processor to facilitate management of a navigation of the content in one or more bounded portions.

In step **304,** a selectable element can be defined. In an aspect, a selectable element can comprise a defined portion of data, such as content presented to a user that is engageable by the user. As an example, certain content can be associated with an operation and/or action, wherein an interaction with the content can cause the operation and/or action to execute. As a further example, the selectable element can be a content button, icon, engageable region, menu item, and the like. In an aspect, the selectable element data **206** can be processed by the control system **126** or processor to facilitate navigation management inside and/or outside one or more bounded portions. In an aspect, the selectable element data **206** can be processed by the control system **126** to facilitate an interaction between a user and presented content such as engaging an icon or menu item on a display.

In step **306,** a navigation rule can be defined (e.g., generated, selected, coded, stored, transmitted, associated, etc.). As an example, navigation rule **208** can comprise specific instructions for processing a navigation command relating to a bounded portion of data. In an aspect, defining a navigation rule can comprise associating processing instructions with content. As an example, defining a navigation rule can comprise associating processing instructions with one or more bounded portions of content. As a further example, when a control command (e.g., select, back, etc.) and/or navigation command (e.g., move up, move down, move left, move right, etc.) is associated with particular content, the control system **126** can process the command(s) based upon one or more navigation rules **208** associated with the content.

In an aspect, the navigation rules can define the logic of navigation inside and/or outside a bounded portion of content, between bounded portions, between selectable elements, and/or relative to other content. As an example, navigation rules can define the movement (e.g., in response to receiving an input command such as a directional command) of an indicator overlaying content. As a further example, navigation rules can comprise a wrap rule, whereby the wrap rule maintains a navigation position within a bounded portion of the content. In an aspect, navigation rules can comprise a wrap left rule, a wrap right rule, a wrap up rule, a wrap down rule, and/or any directionally related rule for navigation. As an example, wrap rules can define navigation at a periphery of a bounded portion of content. As a further example, when a navigation command is received relating to an edge of a bounded portion of content, then the selection or indicator may not exit the bounded portion, but can move to the next logical item within the same bounded portion. In an aspect, the wrap up rule can direct the control system **126** to move a cursor or another indicator to the vertically top logic item within a bounded portion in response to a navigation command. Similarly, wrap down can direct the control system **126** to move a cursor or indicator to the vertically bottom logical item within a bounded portion in response to a navigation command. In an aspect, the wrap left rule can direct the control system **126** to move a cursor or indicator to the horizontally leftmost logical item within a bounded portion in response to a navigation command. Similarly, wrap right can direct the control system **126** to move a cursor or indicator to the horizontally rightmost logical item within a bounded portion in response to a navigation command. Other directions and/or logical relationships (e.g., combinations) can be defined using the wrap rules.

In an aspect, navigation rules **208** can comprise a type classifier that defines navigation for a particular type of content. As an example, a type rule can define data navigation inside a bounded portion of the content. As a further example, navigation rules can comprise a linear type classifier, a grid type classifier, a timeline type classifier, or other classifier-based rules. In an aspect, rules and/or instructions can be added to or modified at any time. As an example, a grid type classifier can apply a navigation rule to a bounded portion that allows multi-direction movement with minimal restraints on which direction a user can navigate through the content. As a further example, a linear type classifier can apply a navigation rule to a bounded portion that limits a movement or navigation to a single dimension (e.g., Cartesian axis, vertical, horizontal, longitudinal, lateral, etc.). As yet another example, a timeline type classifier can apply a navigation rule to a bounded portion that allows multi-direction movement but restricts movement to a particular time segment of pre-defmed time line. In an aspect, the timeline type classifier can be presented in a programming guide setting, wherein information is organized based upon time. As an example, the content within a particular time slot can be classified as a timeline type such that navigation is restricted to the content presented within a particular time slot. Other types and classifications can be used to apply navigation rules over content.

In step **308,** an input command can be received. In an aspect, the input command can be received from a control device such as controller **128.** As an example, the input command can comprise a control command and/or navigation command. As a further example, the input command can be received in any format and via any communication.

In step **310,** the input command can be processed, for example, based upon one or more navigation rules and/or decision engines associated with the input command. In an aspect, a position of an indicator can determine the processing of the input command. As an example, if an input command is received when an indicator is within a particular bounded portion, the navigation rules associated with the particular bounded portion can be applied when processing the input command. In an aspect, the input command can be associated with a particular operation such as a selection operation and/or a movement operation. As an example, when a user engages a button on a control device, the control device can communicate the input command associated with the engaged button to a device to be controlled. The control device can communicate the input command directly or indirectly to the device. As a further example, by engaging the button on the control device, an operation can be executed and a result of the executed operation can be presented via the device to be controlled. In an aspect, a navigation indicator can be presented (at step **312)** to a user to represent an executed operation such as a movement, for example. For example, a cursor can be presented on a display near the bottom of a menu. If a user engages a down button on the controller, a wrap up rule can be applied to cause the cursor to move to the top of the menu (e.g., bounded portion).

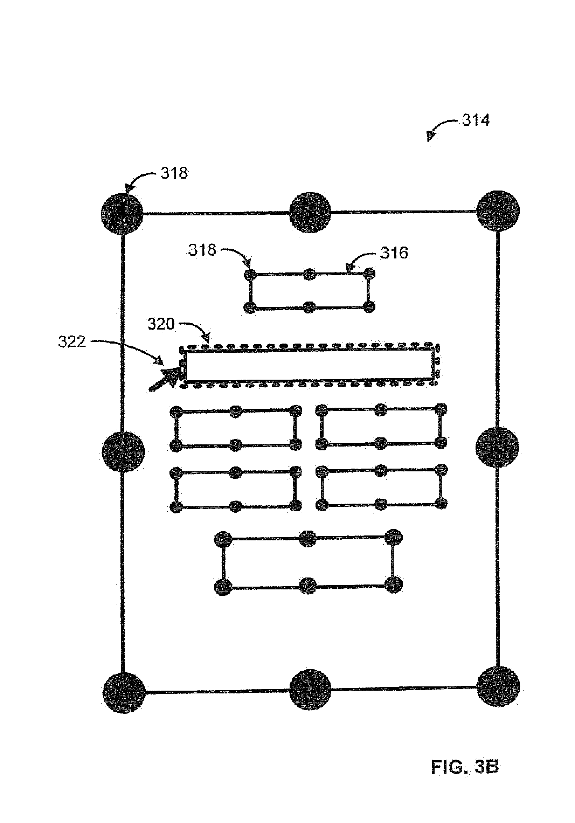

In an aspect, a system and network can be configured to receive input commands for navigating data. As an example, the received input commands can be processed based upon defined bounded portions of content and selectable items. As a further example, rules can be applied to define navigation within bounded portions of content, outside bounded portions of content, between bounded portions of content, and/or between selectable elements. **FIG. 3B** illustrates an exemplary representation of a bounded portion **314** having a plurality of selectable elements **316.** As illustrated in **FIG. 3B****,** the bounded portion **314** is shown bounded by a straight, solid line. However, the illustration of bounded portion **314** is an example and other bounded portions (e.g., rounded, dashed, highlighted, shadowed, etc.) can be used. In an aspect, the bounded portion **314** and/or one or more of the selectable elements **316** can comprise one or more pre-defined position markers **318.** As an example, the position markers can represent a position of at least a portion of the bounded portion **314** and/or the selectable element **316.** As a further example, the position markers **318** may not be visible. The position markers **318** can be stored as part of the boundary data **204** and/or the selectable element data **206 (****FIG. 2A****).** In an aspect, a selection indicator **320** such as a highlight, colorization, or other graphic can be used to identify to a viewer the content element that is currently selected or positioned for selection. In an aspect, a navigation indicator **322** or cursor can be presented to provide feedback to a user and/or viewer.

In an aspect, the position markers can provide reference points for making navigation decisions based upon a relative position of one position marker to another position marker. As an example, navigation rules, via decision engines, can control a movement or navigation between data such as content elements, such as bounded portions **314** and selectable elements **316,** based upon an absolute and/or relative position of the position markers **318.**

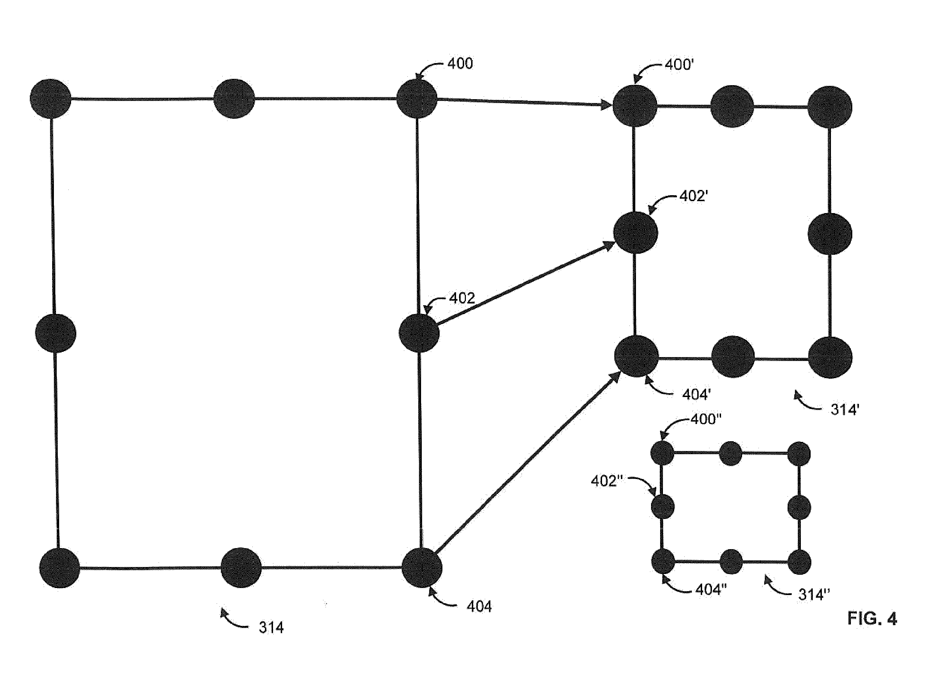

In an aspect, one or more navigation rules and/or decision engines can control navigation of content based upon a collective distance process and/or calculation. As an example, **FIG. 4** illustrates an exemplary collective distance process for navigation of data such as content. In an aspect, a plurality of bounded portions **314, 314', 314"** and/or selectable elements can be positioned relative to one another. As an example, movement between the plurality of bounded portions **314, 314', 314"** and/or selectable elements can be based upon a distance between each of the plurality of bounded portions **314, 314', 314"** and/or selectable elements. As a further example, one or more position markers **400, 402, 404** of a first bounded portion **314** can be compared to one or more position markers **400', 402', 404'** of a second bounded portion **314'** and one or more position markers **400", 402", 404"** of a third bounded portion **314".**

In an aspect, a distance can be calculated between one or more position makers **400, 402, 404** of the first bounded portion **314** to one or more position markers **400', 402', 404'** of the second bounded portion **314'** and one or more position markers **400", 402", 404"** of the third bounded portion **314".** As an example, a cumulative distance can be calculated between any number of the position makers **400, 402, 404** of the first bounded portion **314** to any number of the position markers **400', 402', 404'** of the second bounded portion **314'** and any number of the position markers **400", 402", 404"** of the third bounded portion **314".** As a further example, a distance can be calculated between a select one of the position makers **400, 402, 404** of the first bounded portion **314** to a select one of the position markers **400', 402', 404'** of the second bounded portion **314'** and a select one of the position markers **400", 402", 404"** of the third bounded portion **314".** Accordingly, navigation can be determined based upon one or more distance calculations. For example, it can be determined that a cumulative distance between each of the position makers **400, 402, 404** of the first bounded portion **314** to respective position markers **400', 402', 404'** of the second bounded portion **314'** is less than a cumulative distance between each of the position makers **400, 402, 404** of the first bounded portion **314** to respective position markers of the third bounded portion **314".** As such, when navigating from the first bounded portion **314** to the right (as shown in **FIG. 4****)** a navigation decision can be applied to navigate from the first bounded portion **314** to the second bounded portion **314'** in response to a "right direction" navigation command. Other calculations, decisions, and rules can be used to control navigation.

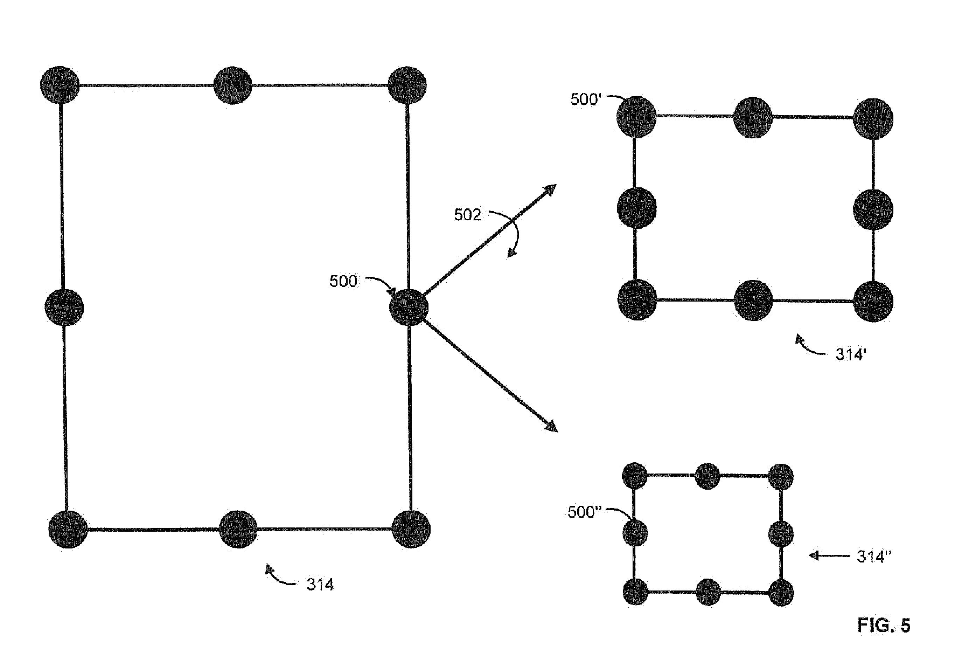

In an aspect, one or more navigation rules and/or decision engines can control navigation based upon proximity and/or a proximity region or field. **FIG. 5** illustrates an exemplary proximity process for navigation of data. In an aspect, a plurality of bounded portions **314, 314', 314"** and/or selectable elements can be disposed, e.g. positioned, relative to one another. As an example, movement between the plurality of bounded portions **314, 314', 314"** and/or selectable elements can be based upon proximity of one or more of the bounded portions **314, 314', 314"** or selectable elements to another of the bounded portions **314, 314', 314"** or selectable elements. As a further example, one or more position markers **500** of a first bounded portion **314** can be compared to one or more position markers **500'** of a second bounded portion **314'** and one or more position markers **500"** of a third bounded portion **314".** The position markers **500, 500', 500"** can be disposed anywhere along or within its associated boundary portion **314, 314', 314"** or outside the boundary portion **314, 314', 314".**

In an aspect, a proximity region **502** can be defined based upon a select one of the position markers **500** of the first bounded portion **314.** As an example, the proximity region **502** can have a pre-defmed arc or field (e.g., about 1 degree to about 180 degrees). Accordingly, a navigation decision can be made based upon which of the bounded portions **314', 314"** is within the proximity region **502.** As an example, a navigation decision can be made based upon a number of position markers **500', 500"** within the proximity region. As a further example, it can be determined that the second bounded portion **314'** has more position markers **500'** within the proximity region than the third bounded portion **314".** As such, when navigating from the first bounded portion **314** to the right (as shown in **FIG. 5****)** a navigation decision can be applied to navigate from the first bounded portion **314** to the second bounded portion **314'** in response to a "right direction" navigation command. Other calculations, decisions, and rules can be used to control navigation.

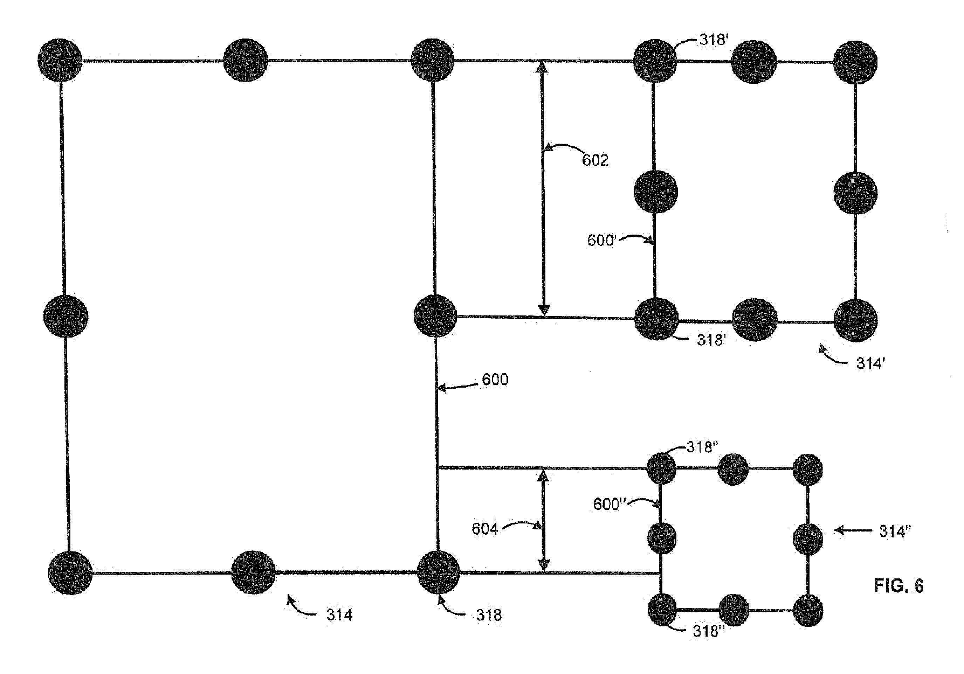

In an aspect, one or more navigation rules and/or decision engines can control navigation based upon a process referred to herein as a face coverage process. As an example, **FIG. 6** illustrates an exemplary face coverage or face volume process for navigation of data. In an aspect, a plurality of bounded portions **314, 314', 314"** and/or selectable elements can be positioned relative to one another. As an example, movement between the plurality of bounded portions **314, 314', 314"** and/or selectable elements can be based upon an overlap of one or more faces **600, 600', 600"** of one or more of the bounded portions **314, 314', 314"** or selectable elements and another of the bounded portions **314, 314', 314"** or selectable elements. In an aspect, any edge, periphery, portion, or section of one or more of the bounded portions **314, 314', 314"** or selectable elements can be compared to another of the bounded portions **314, 314', 314"** to determine an overlap or coverage of one or more portions of at least two bounded portions **314, 314', 314"** or selectable elements. As a further example, one or more position markers **318** of a first bounded portion **314** can be compared to one or more position markers **318'** of a second bounded portion **314'** and one or more position markers **318"** of a third bounded portion **314".**

In an aspect, a first coverage region **602** can be defined based upon a portion of the first bounded portion **314** that shares a region of a dimensional and/or planar space with the second bounded portion **314'.** In an aspect, a second coverage region **604** or overlap area can be defined based upon a portion of the first bounded portion **314** that shares a region of a dimensional and/or planar space with the third bounded portion **314".** Accordingly, a navigation decision can be made based upon a comparison of the first coverage region **602** and the second coverage region **604** (or any number of coverage regions). As shown in **FIG. 6****,** the first coverage region **602** represents a larger percentage of overlap or common planar space than the second coverage region **604.** As such, when navigating from the first bounded portion **314** to the right (as shown in **FIG. 6****)** a navigation decision can be applied to navigate from the first bounded portion **314** to the second bounded portion **314'** in response to a "right direction" navigation command. Other calculations, decisions, and rules can be used to control navigation.

In an aspect, a system and network can be configured to receive input commands for navigating data. As an example, the received input commands can be processed based upon defined bounded portions of content and navigation rules applied to the defined bounded portions of content.

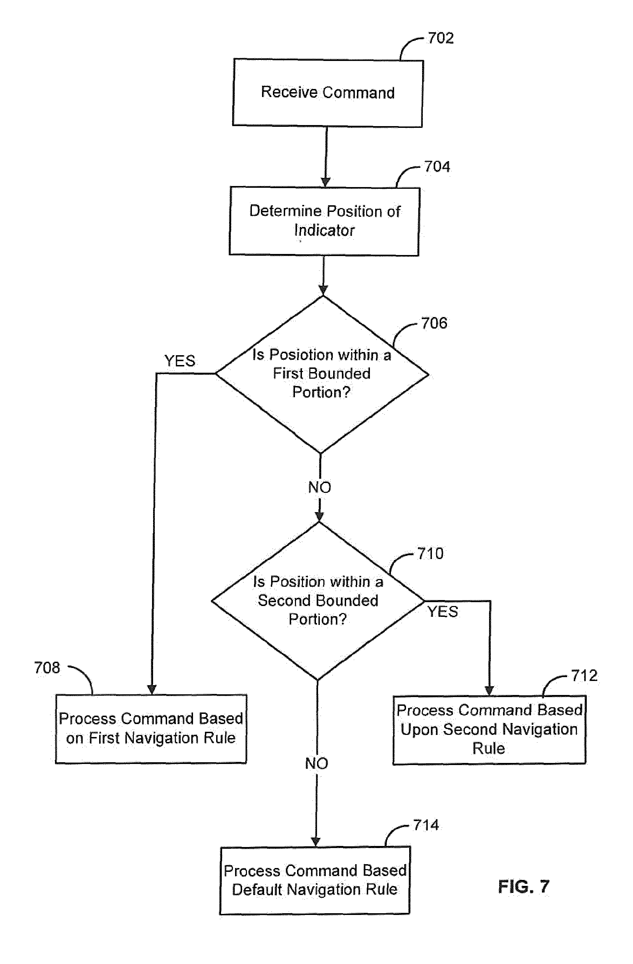

**FIG. 7** illustrates an exemplary method for data navigation. In an aspect, in step **702,** a command can be received. In an aspect, the command can be received from a control device such as controller **128.** As an example, the command can comprise a control command (e.g., select, back, etc.) and/or navigation command (e.g., move up, move down, move left, move right, etc.). As a further example, the command can be received in any format and via any communication (e.g., wired or wireless). In an aspect, the command can request a particular data, object, type of data or object, classification and the like.

In step **704,** a position (e.g., absolute position, relative position, orientation, etc.) of an indicator such as navigation indicator **322 (****FIG. 3B****)** can be determined. In an aspect, an indicator can be presented to a user to represent an executed operation, such as a movement. For example, the indicator can be a cursor, colorization, shape, or any visual element presented on a display. In an aspect, the code for rendering the indicator can be analyzed to determine a position of the indicator. Other techniques can be used to determine a position of the indicator.

In step **706,** the position of the indicator can be analyzed (e.g., compared) with respect to a first bounded portion. In an aspect, boundary data associated with the first bounded portion can be compared to the position of the indicator. Other location and/or positional information can be analyzed and compared to the position of the indicator.

In step **708,** if the position of the indicator is determined to be within the first bounded portion, a command can be processed based upon a first navigation rule associated with the first bounded portion. In an aspect, the first bounded portion can be associated with the first navigation rule comprising a wrap left rule, wherein an input command indicating a rightward direction can cause the indicator to wrap within the first bounded portion to a left most element. Other navigation rules can be associated with the first bounded portion.

In step **710,** position information can be analyzed (e.g., compared) with respect to a second bounded portion. In an aspect, boundary data with the second bounded portion can be compared to the position of the indicator from step 704. Other location and/or positional information can be analyzed and compared to the location information of the indicator.

In step **712,** if the location is determined to be within the second bounded portion, a command can be processed based upon a second navigation rule associated with the second bounded portion. In an aspect, the second bounded portion can be associated with the second navigation rule comprising a wrap right rule, wherein an input command indicating a leftward direction can cause the indicator to wrap within the second bounded portion to a right most element. Other navigation rules can be associated with the first bounded portion.

In step **714,** a default navigation rule can be applied to one or more received commands. As an example, if the position of an indicator is determined to be outside one or more pre-defined bounded portions, a received command can be processed based upon one or more pre-defmed default navigation rules.

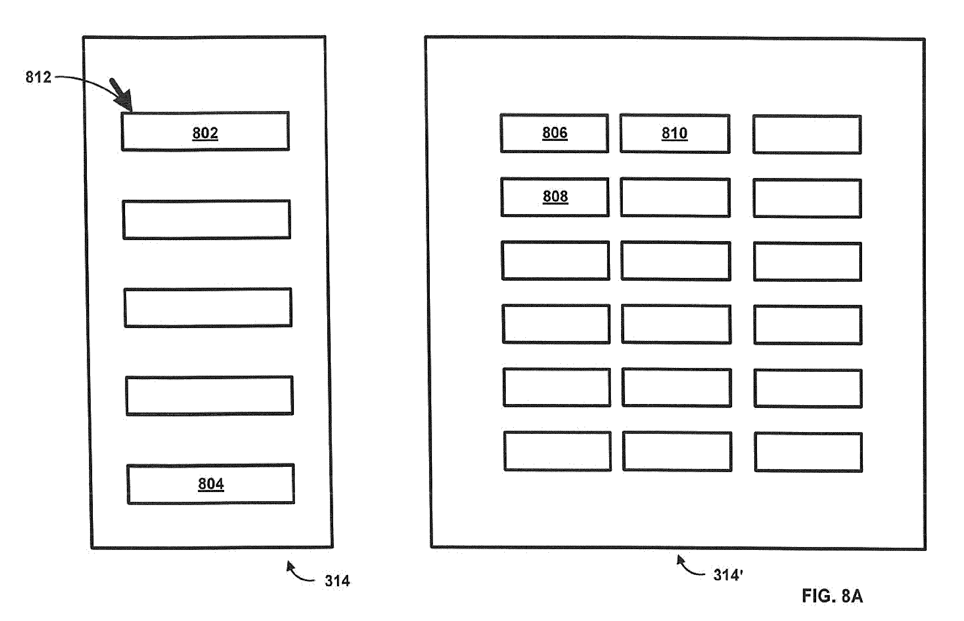

**FIG. 8A** illustrates a user interface (e.g., display **121,** user device **124,** etc.) showing a first bounded portion **314** or region and a second bounded portion **314'** or region. In an aspect, one or more navigation rules can be associated with the first bounded portion **314** and the second bounded portion **314'.** As an example, the first bounded portion **314** can have the same or different navigation rules as the second bounded portion **314'.**

In an aspect, the first bounded portion **314** can comprise a plurality of selectable elements **802, 804.** In an aspect, the second bounded portion can comprise a plurality of selectable elements **806, 808, 810.** As an example, an indicator **812** can be positioned adjacent a first selectable element **802** within the first bounded portion **314.** Accordingly, a first navigation rule associated with the first bounded portion **314** can be implemented in response to a received input command.

In an aspect, the first navigation rule can comprise a wrap down rule, wherein an input command indicating an upward direction can cause the indicator to wrap within the first bounded portion **314** from the first selectable element **802** to a bottom-most element such as second selectable element **804.**

In another aspect, the first navigation rule can comprise a grid layout rule or grid type classifier, wherein an input command indicating a rightward direction can cause the indicator to move from the first bounded portion **314** to the second bounded portion **314'.** As an example, the indicator can move from the first selectable element **802** to a third selectable element **806.**

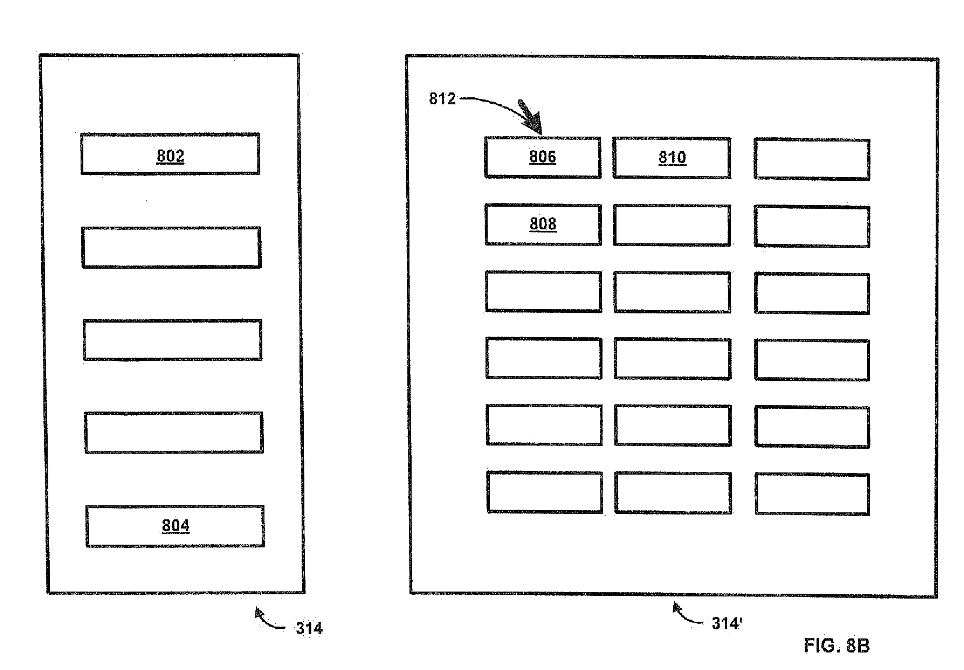

**FIG. 8B** illustrates a user interface showing the first bounded portion **314** and the second bounded portion **314'.** In an aspect, one or more navigation rules can be associated with the first bounded portion **314** and the second bounded portion **314'.** As an example, the first bounded portion **314** can have the same or different navigation rules as the second bounded portion **314'.**

In an aspect, the first bounded portion **314** can comprise the selectable elements **802, 804.** In an aspect, the second bounded portion can comprise the selectable elements **806, 808, 810.** As an example, the indicator **812** can be positioned adjacent the first selectable element **806** within the second bounded portion **314'.** Accordingly, a second navigation rule associated with the second bounded portion **314'** can be implemented in response to a received input command.

In an aspect, the second navigation rule can comprise a grid type classifier, wherein an input command indicating an downward direction can cause the indicator **812** to move within the second bounded portion **314'** in a downward direction, for example, from the third selectable element **806** to a fourth selectable element **808.**

In an aspect, the second navigation rule can comprise a grid type classifier, wherein an input command indicating an rightward direction can cause the indicator **812** to move within the second bounded portion **314'** in a rightward direction, for example, from the third selectable element **806** to a fifth selectable element **810.** Other navigation rules can be implemented.

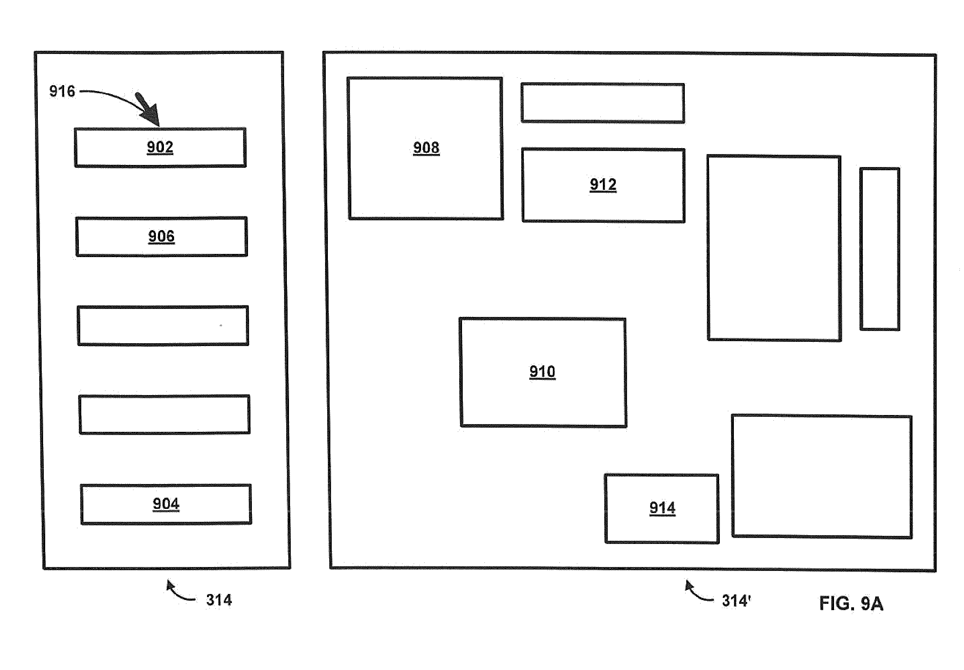

**FIG. 9A** illustrates a user interface showing the first bounded portion **314** and the second bounded portion **314'.** In an aspect, one or more navigation rules can be associated with the first bounded portion **314** and the second bounded portion **314'.** As an example, the first bounded portion **314** can have the same or different navigation rules as the second bounded portion **314'.**

In an aspect, the first bounded portion **314** can comprise a plurality of selectable elements **902, 904, 906.** In an aspect, the second bounded portion can comprise a plurality of selectable elements **908, 910, 912, 914.** As an example, an indicator **916** can be positioned adjacent a first selectable element **902** within the first bounded portion **314.** Accordingly, a first navigation rule associated with the first bounded portion **314** can be implemented in response to a received input command.

In an aspect, the first navigation rule can comprise a wrap down rule, wherein an input command indicating an upward direction can cause the indicator **916** to move within the first bounded portion **314** from the uppermost first selectable element **902** to the bottom-most selectable element, for example, a second selectable element **904.**

In an aspect, the first navigation rule can comprise a grid type classifier, wherein an input command indicating a downward direction can cause the indicator **916** to move within the first bounded portion **314** in a downward direction, for example, from the first selectable element **902** to a third selectable element **906.** Other navigation rules can be implemented.

In another aspect, the first navigation rule can comprise a grid type classifier, wherein an input command indicating a rightward direction can cause the indicator to move from the first bounded portion **314** to the second bounded portion **314'.** As an example, the indicator can move from the first selectable element **902** in the first bounded portion **314** to a fourth selectable element **908** within the second bounded portion **314'.**

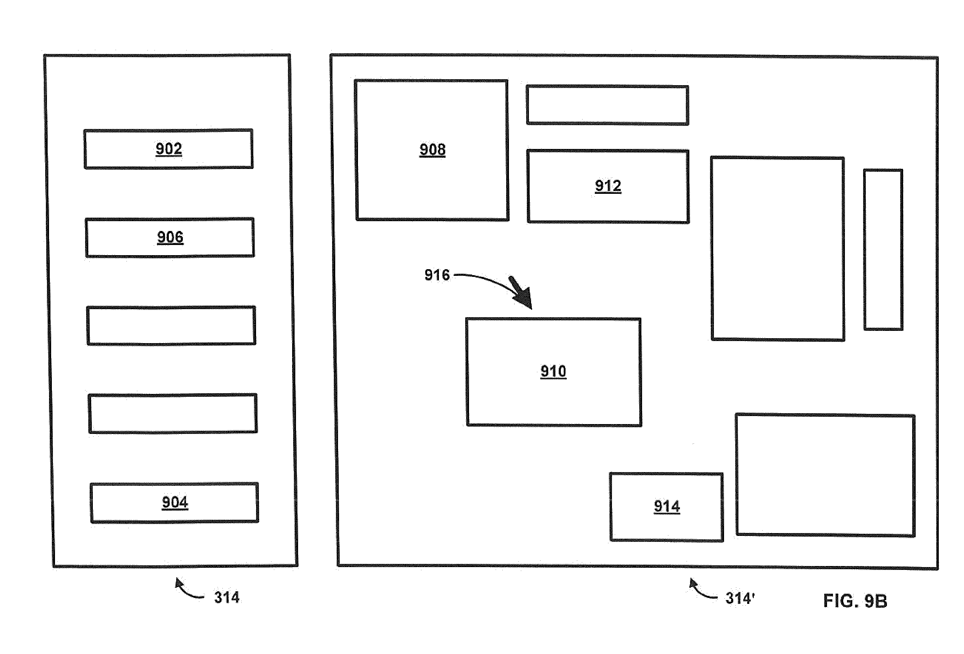

**FIG. 9B** illustrates a user interface showing the first bounded portion **314** and the second bounded portion **314'.** In an aspect, one or more navigation rules can be associated with the first bounded portion **314** and the second bounded portion **314'.** As an example, the first bounded portion **314** can have the same or different navigation rules as the second bounded portion **314'.**

In an aspect, the first bounded portion **314** can comprise the selectable elements **902, 904, 906.** In an aspect, the second bounded portion **314'** can comprise the selectable elements **908, 910, 912, 914.** As an example, an indicator **916** can be positioned adjacent a fifth selectable element **910** within the second bounded portion **314'.** Accordingly, a second navigation rule associated with the second bounded portion **314'** can be implemented in response to a received input command.

In an aspect, the second navigation rule can comprise a grid type classifier, wherein an input command indicating an upward direction can cause the indicator **916** to move within the second bounded portion **314'** in an upward direction, for example, from the fifth selectable element **910** to a sixth selectable element **912.** As an example, a face coverage process can be implemented to determine navigation in the upward direction. As a further example, since the fifth selectable element **910** shares more overlapping face space with sixth selectable element **912** as compared to the fourth selectable element **908,** then the upward control input can result in a movement of the indicator **916** from the fifth selectable element **910** to sixth selectable element **912.**

In an aspect, the second navigation rule can comprise a grid type classifier, wherein an input command indicating an downward direction can cause the indicator **916** to move within the second bounded portion **314'** in a downward direction, for example, from the fifth selectable element **910** to a seventh selectable element **914.** Other navigation rules can be implemented.

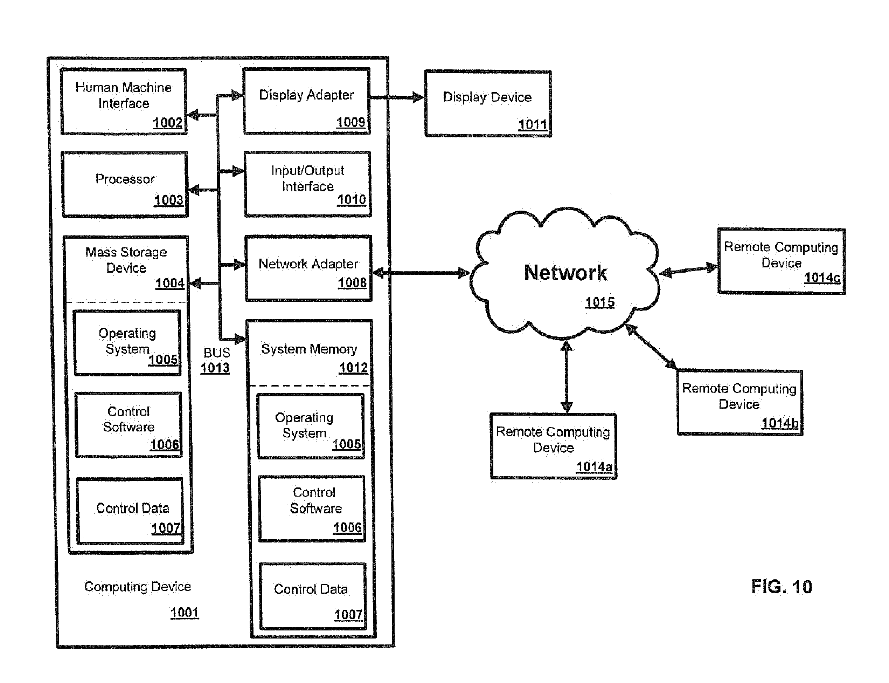

In an exemplary aspect, the methods and systems can be implemented on a computing system such as computing device **1001** as illustrated in **FIG. 10** and described below. By way of example, one or more of the CT **120,** the user device **124,** and the control system **126** of **FIGS. 1-2** can comprise a computing device as illustrated in **FIG. 10****.** Similarly, the methods and systems disclosed can utilize one or more computers to perform one or more functions in one or more locations. **FIG. 10** is a block diagram illustrating an exemplary operating environment for performing the disclosed methods. One skilled in the art will appreciate that provided herein is a functional description and that the respective functions can be performed by software, hardware, or a combination of software and hardware. This exemplary operating environment is only an example of an operating environment and is not intended to suggest any limitation as to the scope of use or functionality of operating environment architecture. Neither should the operating environment be interpreted as having any dependency or requirement relating to any one or combination of components illustrated in the exemplary operating environment.

The present methods and systems can be operational with numerous other general purpose or special purpose computing system environments or configurations. Examples of well known computing systems, environments, and/or configurations that can be suitable for use with the systems and methods comprise, but are not limited to, personal computers, server computers, laptop devices, and multiprocessor systems. Additional examples comprise set top boxes, programmable consumer electronics, network PCs, minicomputers, mainframe computers, distributed computing environments that comprise any of the above systems or devices, and the like.

The processing of the disclosed methods and systems can be performed by software components. The disclosed systems and methods can be described in the general context of computer-executable instructions, such as program modules, being executed by one or more computers or other devices. Generally, program modules comprise computer code, routines, programs, objects, components, data structures, etc. that perform particular tasks or implement particular abstract data types. The disclosed methods can also be practiced in grid-based and distributed computing environments where tasks are performed by remote processing devices that are linked through a communications network. In a distributed computing environment, program modules can be located in both local and remote computer storage media including memory storage devices.

Further, one skilled in the art will appreciate that the systems and methods disclosed herein can be implemented via a general-purpose computing device in the form of a computer **1001.** The components of the computer **1001** can comprise, but are not limited to, one or more processors or processing units **1003,** a system memory **1012,** and a system bus **1013** that couples various system components including the processor **1003** to the system memory **1012.** In the case of multiple processing units **1003,** the system can utilize parallel computing.

The system bus **1013** represents one or more of several possible types of bus structures, including a memory bus or memory controller, a peripheral bus, an accelerated graphics port, and a processor or local bus using any of a variety of bus architectures. By way of example, such architectures can comprise an Industry Standard Architecture (ISA) bus, a Micro Channel Architecture (MCA) bus, an Enhanced ISA (EISA) bus, a Video Electronics Standards Association (VESA) local bus, an Accelerated Graphics Port (AGP) bus, and a Peripheral Component Interconnects (PCI), a PCI-Express bus, a Personal Computer Memory Card Industry Association (PCMCIA), Universal Serial Bus (USB) and the like. The bus **1013,** and all buses specified in this description can also be implemented over a wired or wireless network connection and each of the subsystems, including the processor **1003,** a mass storage device **1004,** an operating system **1005,** control software **1006,** control data **1007,** a network adapter **1008,** system memory **1012,** an Input/Output Interface **1010,** a display adapter **1009,** a display device **1011,** and a human machine interface **1002,** can be contained within one or more remote computing devices **1014a,b,c** at physically separate locations, connected through buses of this form, in effect implementing a fully distributed system.

The computing device **1001** typically comprises a variety of computer readable media. Exemplary readable media can be any available media that is accessible by the computing device **1001** and comprises, for example and not meant to be limiting, both volatile and non-volatile media, removable and non-removable media. The system memory **1012** comprises computer readable media in the form of volatile memory, such as random access memory (RAM), and/or non-volatile memory, such as read only memory (ROM). The system memory **1012** typically contains data such as control data **1007** and/or program modules such as operating system **1005** and control software **1006** that are immediately accessible to and/or are presently operated on by the processing unit **1003.**

In another aspect, the computing device **1001** can also comprise other removable/non-removable, volatile/non-volatile computer storage media. By way of example, **FIG. 10** illustrates a mass storage device **1004** which can provide non-volatile storage of computer code, computer readable instructions, data structures, program modules, and other data for the computing device **1001.** For example and not meant to be limiting, a mass storage device **1004** can be a hard disk, a removable magnetic disk, a removable optical disk, magnetic cassettes or other magnetic storage devices, flash memory cards, CD-ROM, digital versatile disks (DVD) or other optical storage, random access memories (RAM), read only memories (ROM), electrically erasable programmable read-only memory (EEPROM), and the like.

Optionally, any number of program modules can be stored on the mass storage device **1004,** including by way of example, an operating system **1005** and control software **1006.** Each of the operating system **1005** and control software **1006** (or some combination thereof) can comprise elements of the programming and the control software **1006.** Control data **1007** can also be stored on the mass storage device **1004.** Control data **1007** can be stored in any of one or more databases known in the art. Examples of such databases comprise, DB2®, Microsoft® Access, Microsoft® SQL Server, Oracle®, mySQL, PostgreSQL, and the like. The databases can be centralized or distributed across multiple systems.

In another aspect, the user can enter commands and information into the computing device **1001** via an input device (not shown). Examples of such input devices comprise, but are not limited to, a keyboard, pointing device (*e.g.*, a "mouse"), a microphone, a joystick, a scanner, visual systems such as Microsoft's Kinect, audio systems that process sound such as music or speech, a traditional silver remote control, tactile input devices such as gloves, touch-responsive screen, body coverings, and the like These and other input devices can be connected to the processing unit **1003** via a human machine interface **1002** that is coupled to the system bus **1013,** but can be connected by other interface and bus structures, such as a parallel port, game port, an IEEE 1394 Port (also known as a Firewire port), a serial port, or a universal serial bus (USB).

In yet another aspect, a display device **1011** can also be connected to the system bus **1013** via an interface, such as a display adapter **1009.** It is contemplated that the computer **1001** can have more than one display adapter **1009** and the computing device **1001** can have more than one display device **1011.** For example, a display device can be a monitor, an LCD (Liquid Crystal Display), or a projector. In addition to the display device **1011,** other output peripheral devices can comprise components such as speakers (not shown) and a printer (not shown) which can be connected to the computing device **1001** via Input/Output Interface **1010.** Any step and/or result of the methods can be output in any form to an output device. Such output can be any form of visual representation, including, but not limited to, textual, graphical, animation, audio, tactile, and the like. The display **1011** and computing device **1001** can be part of one device, or separate devices.

The computing device **1001** can operate in a networked environment using logical connections to one or more remote computing devices **1014a,b,c.** By way of example, a remote computing device can be a personal computer, portable computer, a smartphone, a server, a router, a network computer, a peer device or other common network node, and so on. Logical connections between the computing device **1001** and a remote computing device **1014a,b,c** can be made via a network **1015,** such as a local area network (LAN) and a general wide area network (WAN). Such network connections can be through a network adapter **1008.** A network adapter **1008** can be implemented in both wired and wireless environments. Such networking environments are conventional and commonplace in dwellings, offices, enterprise-wide computer networks, intranets, and the Internet. Furthermore, the computing device **1001** can communicate information to one or more of the remote computing devices **1014a,b,c** for data analysis, pattern recognition, and data navigation and/or control, for example. In an aspect, the control system **126** can communicate information to one or more of the remote computing devices **1014a,b,c** (e.g., data center) for one or more of analyzing the alert to determine an appropriate response, aggregating a plurality of received alerts, and filtering a plurality of received alerts.

For purposes of illustration, application programs and other executable program components such as the operating system **1005** are illustrated herein as discrete blocks, although it is recognized that such programs and components reside at various times in different storage components of the computing device **1001,** and are executed by the data processor(s) of the computer. An implementation of control software **1006** can be stored on or transmitted across some form of computer readable media. Any of the disclosed methods can be performed by computer readable instructions embodied on computer readable media. Computer readable media can be any available media that can be accessed by a computer. By way of example and not meant to be limiting, computer readable media can comprise "computer storage media" and "communications media." "Computer storage media" comprise volatile and non-volatile, removable and non-removable media implemented in any methods or technology for storage of information such as computer readable instructions, data structures, program modules, or other data. Exemplary computer storage media comprises, but is not limited to, RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which can be used to store the desired information and which can be accessed by a computer.

In an aspect, the systems and methods of the present disclosure can minimize time to market for on screen applications and maximize the breadth of devices that can implement certain applications having navigation components.

The methods and systems can employ Artificial Intelligence techniques such as machine learning and iterative learning. Examples of such techniques include, but are not limited to, expert systems, case based reasoning, Bayesian networks, behavior based AI, neural networks, fuzzy systems, evolutionary computation (e.g. genetic algorithms), swarm intelligence (e.g. ant algorithms), and hybrid intelligent systems (e.g. Expert inference rules generated through a neural network or production rules from statistical learning).

While the methods and systems have been described in connection with preferred embodiments and specific examples, it is not intended that the scope be limited to the particular embodiments set forth, as the embodiments herein are intended in all respects to be illustrative rather than restrictive.

Unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is no way intended that an order be inferred, in any respect. This holds for any possible non-express basis for interpretation, including: matters of logic with respect to arrangement of steps or operational flow; plain meaning derived from grammatical organization or punctuation; the number or type of embodiments described in the specification.

It will be apparent to those skilled in the art that various modifications and variations can be made without departing from the scope or spirit. Other embodiments will be apparent to those skilled in the art from consideration of the specification and practice disclosed herein. It is intended that the specification and examples be considered as exemplary only, with a true scope and spirit being indicated by the following claims.

## Claims

1. A method for navigating data, comprising:
defining a bounded portion of content;
defining a navigation rule for the bounded portion of the content, wherein the navigation
rule defines a movement of an indicator relative to the bounded portion.

2. The method of claim 1, wherein the content includes one or more of a menu item, an icon, and a selectable element.

3. The method of claim 1, wherein the content includes a selectable element, whereby a selection of the selectable element executes an action associated with the selectable element.

4. The method of claim 1, wherein the bounded portion includes a plurality of position markers.

5. The method of claim 4, wherein the position markers represent a periphery of the bounded portion of the content.

6. The method of claim 1, wherein the navigation rule includes a wrap rule, whereby the wrap rule maintains a navigation position within the bounded portion of the content.

7. The method of claim 1, wherein the navigation rule includes a type rule defining navigation inside of the of the bounded portion of the content.

8. A method for navigating data, comprising:
defining a bounded portion of content;
defining a navigation rule for the bounded portion of the content, wherein the navigation
rule defines a movement of an indicator relative to the content;
receiving an input command relating to the movement of the indicator; and
processing the input command based upon the navigation rule.

9. The method of claim 8, wherein the content includes one or more of a menu item, an icon, and a selectable element.

10. The method of claim 8, wherein the content includes a selectable element, whereby a selection of the selectable element executes an action associated with the selectable element.

11. The method of claim 8, wherein the bounded portion includes a plurality of position markers.

12. The method of claim 11, wherein the position markers represent a periphery of the bounded portion of the content.

13. The method of claim 8, wherein the navigation rule includes a decision engine for controlling navigation between a plurality of selectable elements disposed in the bounded portion.

14. The method of claim 13, wherein the decision engine controls navigation based upon a collective distance.

15. The method of claim 13, wherein the decision engine controls navigation based upon a proximity.

16. The method of claim 13, wherein the decision engine controls navigation based upon a proximity region.

17. The method of claim 13, wherein the decision engine controls navigation based upon a face volume.

18. The method of claim 8, wherein the navigation rule includes a wrap rule, whereby the wrap rule maintains a navigation position within the bounded portion of the content.

19. The method of claim 8, wherein the navigation rule includes a type rule defining navigation inside of the of the bounded portion of the content.

20. A method for navigating data, comprising:
receiving a command;
determining a location of an indicator;
if the location is within a first bounded portion of content, processing the command
based upon a first navigation rule to perform a first action; and
if the location is within a second bounded portion of content, processing the command
based upon a second navigation rule to perform a second action.
